# EUROPÄISCHE PATENTSCHRIFT

(11) **EP 3 655 302 B1**
(45) Veröffentlichungstag und Bekanntmachung des Hinweises auf die Patenterteilung: **07.07.2021**
(21) Anmeldenummer: 18769053.2
(22) Anmeldetag: 24.08.2018
(51) Int. Cl.: B61D 19/00, B61D 19/02, B61D 17/02

(54) **TÜRDICHTUNG FÜR EIN SCHIENENFAHRZEUG**
DOOR SEAL FOR A RAIL VEHICLE
JOINT DE PORTE POUR VÉHICULE FERROVIAIRE

(30) Priorität: 19.09.2017 DE 102017216576
(43) Veröffentlichungstag der Anmeldung: 27.05.2020
(73) Patentinhaber: Siemens Mobility GmbH, 81739 München (DE)
(72) Erfinder: RODRIGUEZ AHLERT, Carlos-Jose, 52538 Selfkant (DE); RÜTER, Arnd, 47802 Krefeld (DE)
(86) Internationale Anmeldenummer: PCT/EP2018/072864
(87) Internationale Veröffentlichungsnummer: WO 2019/057440

(56) Entgegenhaltungen:
- DE-A1-102014 217 343
- US-A- 2 226 419

## Beschreibung

Die Erfindung betrifft ein Schienenfahrzeug mit einer Schiebetür.

Um schnelle Fahrgastwechsel bei Schienenfahrzeugen, insbesondere im Bahnbereich, zu ermöglichen, werden oftmals Taschenschiebetüren verwendet. Konzeptionell bedingt kommt es dabei zu einem Rücksprung in der Schienenfahrzeugaußenkontur. Dies wiederum hat zur Folge, dass an den Dichtungselementen zwischen Schiebetür und Wagenkasten teilweise hohe Überdrücke entstehen, welche zu einer Fehlfunktion der Dichtungselemente, beispielsweise durch Abheben der Dichtlippe, und somit zu einem Fehllufteintrag in das Schienenfahrzeuginnere führen können. Erhöhte Fehllufteinträge wie beispielsweise Längsströmungen im Schienenfahrzeug führen dabei nachteilig zu einer Verringerung des Fahrgastkomforts und einer Leistungsreduktion der Klimaanlage.

Bisher wurde das Problem durch eine Ertüchtigung des Dichtsystems wie beispielsweise härtere Dichtlippen oder eine komplette Überarbeitung des Dichtkonzepts gelöst. Es wurde also nicht die Ursache des Problems, nämlich das Entstehen eines Überdrucks während der Fahrt an der Schiebetür durch Umströmung des Schienenfahrzeugs, angegangen, sondern es wurde versucht, die Folgen zu minimieren, also möglichst wenig Fehllufteintrag bei gegebenen Randbedingungen. Lösungsansätze, welche die aerodynamische Ursache angehen, sind nicht bekannt.

Druckschrift DE 10 2014 217 343 A1 lehrt eine gattungsgemäße Türdichtung für ein Schienenfahrzeug gemäß dem Oberbegriff des unabhängigen Patentanspruchs 1.

Die Aufgabe besteht darin, ein Schienenfahrzeug mit einer Schiebetür zu entwickeln, bei dem während einer Fahrt ein geringerer Strömungsdruck auf die Dichtungen aufgebaut wird.

Erfindungsgemäß wird ein Schienenfahrzeug zur Verfügung gestellt, welches eine Schienenfahrzeugaußenwand mit einer Türöffnung umfasst. Ferner umfasst das Schienenfahrzeug eine bezüglich der Schienenfahrzeugaußenwand zu einem Innenbereich des Schienenfahrzeugs eingerückte Schiebetür, welche im geschlossenen Zustand die Türöffnung abdeckt. Das Schienenfahrzeug umfasst des Weiteren einen Türrahmen an einem Randbereich der Türöffnung. Ferner ist zwischen der Schiebetür im geschlossenen Zustand und dem Türrahmen ein mit einem Dichtelement abgedichteter Spalt ausgebildet. Ferner umfasst das Schienenfahrzeug eine am Türrahmen befestigte, räumlich vom Türrahmen und der Schiebetür beabstandete, sich in vertikaler Ausdehnung der Schiebetür erstreckende, dem Spalt vorgelagerte aerodynamische Türblende, welche entlang des Türrahmens ausgerichtet ist.

In anderen Worten ist die aerodynamische Türblende in Richtung des Außenbereichs des Schienenfahrzeugs ausgerichtet. Mit anderen Worten ist die Schiebetür im geschlossenen Zustand bezüglich der Schienenfahrzeugaußenwand zum Innenbereich des Schienenfahrzeugs hin verschoben. Die Erfindung ist ferner nicht auf eine strenge geometrische Ausrichtung der aerodynamischen Türblende beschränkt. Beispielsweise kann die aerodynamische Türblende auch grundsätzlich einen kleinen Anstellwinkel mit dem Türrahmen einschließen oder gar eine Krümmung im Vergleich zur Türrahmen aufweisen. Insbesondere spielen solche Schiebetüren bei Zügen bzw. Schnellzügen eine Rolle, bei denen aufgrund der hohen Relativgeschwindigkeiten entsprechend hohe Drücke an dem Dichtelement anliegen können. Die Befestigung an der aerodynamischen Türblende kann mittels Verbindungsstegen, beispielsweise horizontalen Verbindungsstegen, erfolgen, wobei die Erfindung nicht darauf beschränkt ist.

Das Schienenfahrzeug hat den Vorteil, dass durch die Krümmung der Strömung bzw. die Umlenkung der Strömung an der aerodynamischen Türblende im Bereich zwischen dem von der Schiebetür abgewandten Ende des Türrahmens ein Unterdruck erzeugt wird, wodurch ein strömungsmechanischer Saugeffekt weg von dem Spalt entlang von Türrahmen und Türblende erzielt wird. Beispielsweise kann sich ein Strömungsabriss an einem Abrisspunkt an dem von der Schiebetür im geschlossenen Zustand abgewandten Ende der aerodynamischen Türblende während der Fahrt des Schienenfahrzeugs ausbilden, welcher durch den kleinen Krümmungsradius bzw. die Abrisskante erzeugt wird. Die Positionierung des Abrisspunkts kann dabei beispielsweise die Stärke des Saugeffekts beeinflussen, wobei auch ohne Strömungsabriss ein Saugeffekt erzielt werden kann. Durch die aerodynamische Türblende wird ferner ein Strömungskanal zwischen dem Türrahmen und der aerodynamischen Türblende erzeugt, in welchem aufgrund des erzeugten Unterdrucks durch Saugwirkung eine Ausgleichsströmung von dem Bereich des Spalts zum Bereich des abgewandten Endes der aerodynamischen Türblende hin erfolgt. Dadurch wird die Überdrucksituation an dem Dichtelement während der Fahrt entschärft oder zumindest gemindert. Ferner wird durch die Erfindung die eigentliche Ursache der Fehllufteinträge in das Schienenfahrzeug, nämlich den erzeugten Überdruck am Dichtelement während der Fahrt, verhindert oder zumindest gemindert. Es muss ferner kein verändertes Dichtkonzept, beispielsweise hin zu komplexeren Lösungen bzw. zu hochwertigen Dichtlippen, erfolgen. Ferner ist eine nachträgliche Montage in bereits vorhandenen Schienenfahrzeugkonzepten möglich. Dazu ist beispielsweise lediglich ein zusätzliches Blech als Türblende erforderlich, wobei auch andere Materialien wie Kunststoffe verwendet werden können. Durch das erfindungsgemäße Schienenfahrzeug kann der Fehllufteintrag in den Innenbereich des Schienenfahrzeugs minimiert werden. Ferner können dadurch Energiekosten für Klimaanlagen minimiert werden. Das führt wiederum zu einem verminderten Risiko bei der Kundenabnahme und zu einem energieeffizienteren Schienenfahrzeug.

Die Schiebetür kann dabei als eine Taschenschiebetür ausgebildet sein. Taschenschiebetüren finden gerade im Bahnbereich häufig Anwendung und die vorliegende Erfindung ist insbesondere für diesen Schiebetürtypus von Bedeutung.

Bevorzugt kann die aerodynamische Türblende parallel zum Türrahmen ausgerichtet sein. Dadurch kann ein Strömungskanal mit konstanter Breite ausgebildet werden. Der Saugeffekt kann dadurch verbessert werden.

Die aerodynamische Türblende kann senkrecht zur Schienenfahrzeugaußenwand ausgerichtet sein.

Die aerodynamische Türblende kann sich entlang des Türrahmens bis zur Schienenfahrzeugaußenwand erstrecken. Dadurch ragt die Türblende nicht über die Schienenfahrzeugaußenwand heraus. Gleichwohl wird dadurch ein Strömungskanal zur Ausgleichsströmung von maximaler Länge ausgebildet.

Bevorzugt kann ein Wandabstand der aerodynamischen Türblende von dem Türrahmen in Abhängigkeit von einer Breite des Spalts ausgebildet sein. Beispielsweise kann zu einem breiteren Spalt auch ein größerer Wandabstand ausgebildet werden. Dadurch kann die Saugwirkung entsprechend optimiert werden. Ein zu kleiner Wandabstand hemmt grundsätzlich den Saugeffekt. Ein zu großer Abstand ist konstruktiv nicht erwünscht. Ein zu großer Abstand kann auch hemmende Wirkung haben.

Der Wandabstand ist bevorzugt größer als die Breite des Spalts. Dadurch ergibt sich eine bessere Saugwirkung.

Insbesondere kann sich eine abgerundete Kante an dem zur Schiebetür im geschlossenen Zustand abgewandten Ende der aerodynamischen Türblende befinden. Hier kann ferner entsprechend der Ablösepunkt der Strömung vorteilhaft verschoben werden.

Dabei kann sich die abgerundete Kante bevorzugt auf einer zur Türrahmen abgewandten Seite befinden. Dadurch wird der Ablösepunkt in Richtung des oberen Bereichs zwischen aerodynamischer Türblende und Türrahmen verschoben, sodass der Bereich des Unterdrucks optimal lokalisiert ist, um eine möglichst effiziente Saugwirkung zu erzielen. Bei einem eckigen Ende würde der Ablösepunkt entsprechend nach vorne verschoben, sodass ein Saugeffekt entsprechend geschwächt wäre.

Alternativ kann sich eine abgeschrägte Kante an dem von der Schiebetür im geschlossenen Zustand abgewandten Ende der aerodynamischen Türblende und auf der zum Türrahmen abgewandten Seite befinden. Auch durch eine abgeschrägte Kante kann eine Saugwirkung verbessert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: ein Schienenfahrzeug des Standes der Technik mit einer Schiebetür in Querschnittsansicht,
- Figur 2: ein erfindungsgemäßes Schienenfahrzeug mit einer Schiebetür in Querschnittsansicht,
- Figur 3: ein Schienenfahrzeug des Standes der Technik mit einer Schiebetür in Querschnittsansicht,
- Figur 4: eine Druckverteilung in einem Außenbereich eines Schienenfahrzeugs des Standes der Technik in Querschnittsansicht,
- Figur 5: eine Druckverteilung in einem Außenbereich eines erfindungsgemäßen Schienenfahrzeugs in Querschnittsansicht, und
- Figur 6: eine Frontansicht eines erfindungsgemäßen Schienenfahrzeugs.

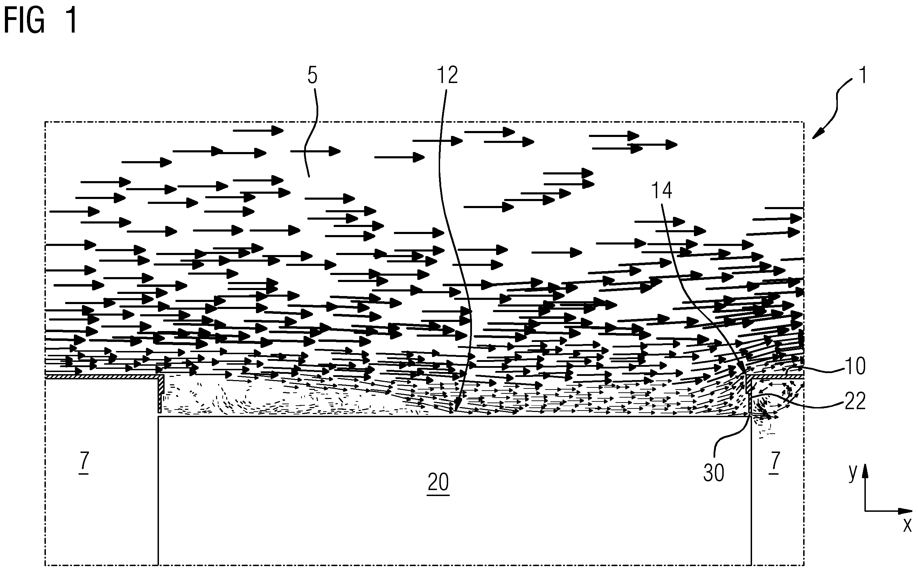

In der Figur 1 ist ein Schienenfahrzeug 1 mit einer Schiebetür 20 des Standes der Technik in Querschnittsansicht gezeigt. Die Querschnittsebene liegt hierbei in einer x-y-Ebene. Ferner wird in der Figur 1 eine Außenumströmung in einem Außenbereich 5 des Schienenfahrzeugs 1 gezeigt.

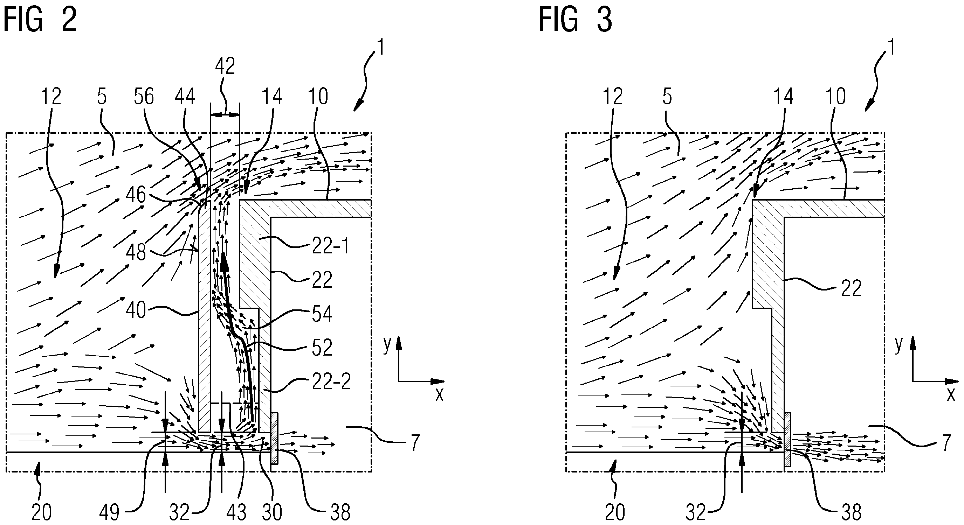

Das Schienenfahrzeug 1 umfasst eine Schienenfahrzeugaußenwand 10 mit einer Türöffnung 12. Die Schiebetür 20 ist dabei bezüglich der Schienenfahrzeugaußenwand 10 zu einem Innenbereich 7 des Schienenfahrzeugs 1 eingerückt und deckt im geschlossenen Zustand die Türöffnung 12 ab. Das Schienenfahrzeug 1 umfasst ferner an einem Randbereich 14 der Türöffnung 12 einen Türrahmen 22. Zwischen der Schiebetür 20 und dem Türrahmen 22 im geschlossenen Zustand ist konstruktionsbedingt ein mit einem Dichtelement 38 abgedichteter Spalt 30 ausgebildet, welcher im Zusammenhang mit Figur 2 und 3 klarer ersichtlich wird.

Das Schienenfahrzeug 1 befindet sich ferner in Fahrt, in der Figur beispielhaft nach links fahrend, und wird entsprechend von einer Luftströmung aufgrund der Relativbewegung umströmt.

Wie aus der Figur 1 ersichtlich, liegt die Luftströmung bereits im Bereich einer Mitte der Schiebetür 20 wieder an der Schiebetür 20 an und verläuft dann bis zum Türrahmen 22. Dort drückt die Luftströmung nachteilig auf das Dichtelement von dem Spalt 30 und erzeugt dort einen entsprechenden Überdruck. Das kann zu einem Abheben einer Dichtung und somit zu einem Fehllufteintrag, einem Wassereintrag oder einem Schneeeintrag führen.

In der Figur 2 ist ein erfindungsgemäßes Schienenfahrzeug 1 mit einer Schiebetür 20 gezeigt mit Außenströmung im Außenbereich 5 des Schienenfahrzeugs 1. Gleichsam wie in Figur 1 umfasst das erfindungsgemäße Schienenfahrzeug 1 eine Schienenfahrzeugaußenwand 10 mit einer Türöffnung 12. Im Vergleich zu Figur 1 ist rein beispielhaft nur eine Seite der Türöffnung 12 gezeigt, wobei eine im Folgenden beschriebene Vorrichtung auch auf der anderen Seite erfolgen kann.

Ferner umfasst das Schienenfahrzeug 1 eine bezüglich der Schienenfahrzeugaußenwand 10 zu einem Innenbereich 7 des Schienenfahrzeugs 1 eingerückte Schiebetür 20, welche im geschlossenen Zustand die Türöffnung 12 abdeckt.

Im Weiteren ist die Schiebetür 20 stets im geschlossenen Zustand. Die Schiebetür 20 kann rein beispielhaft aus zwei Türflügeln bestehen und jeweils nach beiden Seiten, also in Richtung bzw. Gegenrichtung zur x-Achse, öffnen, wobei die Erfindung nicht darauf beschränkt ist und auch weitere dem Fachmann bekannte Schiebetüren verwendet werden können.

Die Schienenfahrzeugaußenwand 10 weist ferner an einem Randbereich 14 der Türöffnung 12 einen Türrahmen 22 auf. Dieser Türrahmen 22 ist ausgehend von der Schienenfahrzeugaußenwand 10 zum Innenbereich 7 des Schienenfahrzeugs 1 gerichtet, hier beispielsweise in Gegenrichtung zur y-Achse. Dabei ist zwischen der Schiebetür 20 und dem Türrahmen 22 im geschlossenen Zustand ein mit einem Dichtelement 38 abgedichteter Spalt 30 ausgebildet.

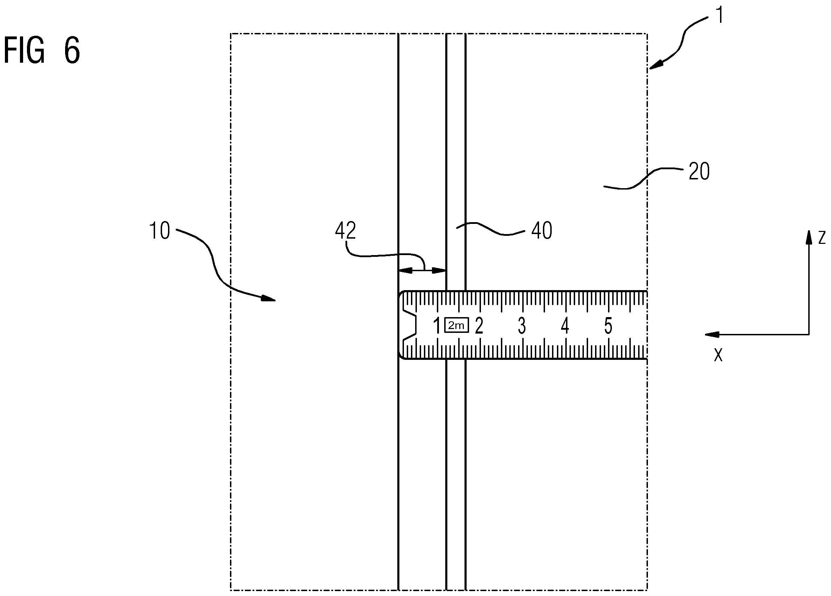

Zudem umfasst das erfindungsgemäße Schienenfahrzeug 1 eine aerodynamische Türblende 40. Die aerodynamische Türblende 40 ist dabei mit dem Türrahmen 22 befestigt und von dem Türrahmen 22 räumlich beabstandet. Ferner ist die aerodynamische Türblende 40 von der Schiebetür 20 im geschlossen Zustand beabstandet. Ferner ist die aerodynamische Türblende 40 dem Spalt 30 vorgelagert. Ferner erstreckt sich die aerodynamische Türblende 40 in vertikaler Ausdehnung der Schiebetür 20, was insbesondere im Zusammenhang mit der Figur 6 klarer wird. Insbesondere ist die aerodynamische Türblende 40 entlang des Türrahmens 22 ausgerichtet.

Das Schienenfahrzeug 1 hat den Vorteil, dass die aerodynamische Türblende 40 eine Abrisskante 56 bzw. einen Strömungsabriss oder in anderen Worten einen Abrisspunkt an dem zur Schiebetür 20 abgewandten Ende 44 der aerodynamischen Türblende 40 erzeugt. Im Bereich zwischen einem abgewandten Ende 44 und dem Türrahmen 22 wird ein Unterdruck erzeugt, wodurch ein strömungsmechanischer Saugeffekt erzielt wird.

Der Bereich zwischen der aerodynamischen Türblende 40 und dem Türrahmen 22 bildet dabei einen Strömungskanal 54 aus, in welchem aufgrund des Unterdrucks eine Ausgleichsströmung 52 von dem Bereich des Spalts 30 zum Bereich des abgewandten Endes 44 führt, welche durch einen Pfeil in der Figur 2 skizziert ist.

Dadurch wird die Überdrucksituation an dem Dichtelement 38 während der Fahrt entschärft oder zumindest gemindert. Durch die Erfindung wird ferner die eigentliche Ursache der Fehllufteinträge in das Schienenfahrzeug 1, nämlich den erzeugten Überdruck am Dichtelement 38 während der Fahrt, gemindert. Somit muss ferner kein verändertes Dichtkonzept, beispielsweise hin zu komplexeren Lösungen bzw. zu hochwertigen Dichtlippen, erfolgen.

Zudem ist auch eine nachträgliche Montage einer solchen aerodynamischen Türblende 40 in bereits vorhandenen Schienenfahrzeugkonzepten möglich. Dazu ist beispielsweise lediglich ein zusätzliches Blech als aerodynamische Türblende 40 erforderlich, wobei auch andere Materialien wie Kunststoffe verwendet werden können. Material- und Montagekosten halten sich somit in Grenzen.

Durch das erfindungsgemäße Schienenfahrzeug 1 kann insgesamt der Fehllufteintrag in den Innenbereich 7 des Schienenfahrzeugs 1 minimiert werden. Ferner können auch Energiekosten für Klimaanlagen minimiert werden. Das führt wiederum zu einem verminderten Risiko bei der Kundenabnahme und zu einem energieeffizienteren Schienenfahrzeug.

Die aerodynamische Türblende 40 kann mittels eines Verbindungselements 43 mit dem Türrahmen 22 befestigt sein, was in dem in der in Figur 2 gezeigten Querschnittsansicht lediglich als gestrichelte Linie angedeutet ist, da das Verbindungselement 43 nicht in der vorliegenden Querschnittsebene vorliegen muss, sondern bezüglich einer Vertikalen zur x-y-Ebene verschoben sein kann. Rein beispielhaft kann das Verbindungselement 43 Verbindungsstege, beispielsweise horizontale Verbindungsstege, und Verschraubungen umfassen. Diese können beispielsweise an einem oberen Ende und einem unteren Ende bezüglich einer Vertikalrichtung der aerodynamischen Türblende 40 mit dem Türrahmen 22 verbunden sein, wobei die Erfindung nicht auf eine bestimmte Verbindungsart oder auch eine Positionierung der Verbindungselemente 43 beschränkt ist.

Der Türrahmen 22 kann beispielsweise senkrecht zur Schienenfahrzeugaußenwand 10, also in y-Richtung, ausgerichtet sein, wobei die Erfindung nicht darauf beschränkt ist. Beispielweise kann der Türrahmen 22 auch einen geringeren Winkel als 90° bezüglich der Schienenfahrzeugaußenwand 10 aufweisen oder aber auch einen größeren Winkel als 90° aufweisen.

Der Türrahmen 22 weist ferner lediglich rein beispielhaft einen Sprung im Querschnittsprofil auf, der den Türrahmen 22 in einen breiten ersten Türrahmenbereich 22-1 und einen schmalen zweiten Türrahmenbereich 22-2 aufteilt. In anderen Ausführungsformen ist der Türrahmen 22 gerade, d. h. ohne einen solchen Sprung ausgebildet oder in einer weiteren Ausführung ist der Sprung abgerundet. Der Türrahmen 22 kann ferner ein Teil der Schienenfahrzeugaußenwand 10 sein, wobei die Erfindung nicht darauf beschränkt ist. Die Erfindung ist ferner nicht auf ein bestimmtes Querschnittsprofil des Türrahmens 22 beschränkt.

Solche Schiebetüren 20 können beispielsweise als Taschenschiebetüren ausgebildet sein, welche einen bevorzugten Anwendungsbereich für die erfindungsgemäßen Schienenfahrzeuge 1 darstellen. Insbesondere finden Taschenschiebetüren im Bahnbereich Anwendung.

In der vorliegenden Ausführungsform ist die aerodynamische Türblende 40 senkrecht zur Schienenfahrzeugaußenwand 10 ausgerichtet. Insbesondere kann die aerodynamische Türblende 40 parallel zum Türrahmen 22 ausgerichtet sein, also in y-Richtung, siehe dazu Figur 2. Die Erfindung ist jedoch nicht darauf beschränkt. Beispielsweise kann in anderen Ausführungsformen die aerodynamische Türblende 40 nicht streng parallel zum Türrahmen 22 ausgerichtet sein. Beispielsweise kann die aerodynamische Türblende 40 gegenüber dem Türrahmen 22 leicht geneigt sein. Zum Beispiel kann die aerodynamische Türblende 40 zum Türrahmen 22 hingeneigt oder von dem Türrahmen 22 weggeneigt sein. Grundsätzlich kann die aerodynamische Türblende 40 auch eine Krümmung aufweisen.

Bevorzugt erstreckt sich die aerodynamische Türblende 40 entlang des Türrahmens 22 bis zur Schienenfahrzeugaußenwand 10. Dadurch ragt die aerodynamische Türblende 40 nicht über die Schienenfahrzeugaußenwand 10 hinaus und es wird dennoch ein Strömungskanal 54 großer Länge erzeugt.

Die aerodynamische Türblende 40 weist ferner einen Wandabstand 42 zwischen der aerodynamischen Türblende 40 und dem Türrahmen 22 auf. Der Wandabstand 42 kann dabei insbesondere in Abhängigkeit von einer Breite 32 des Spalts 30 ausgebildet sein. Dadurch kann der Saugeffekt optimiert werden. Ein zu kleiner Wandabstand 42 hemmt dabei den Saugeffekt. Daher ist der Wandabstand 42 bevorzugt größer als die Breite 32 des Spalts 30 ausgebildet, siehe dazu Figur 2.

Ein zu großer Wandabstand 42 ist konstruktionsbedingt nicht erwünscht. Eine typische Breite 32 des Spalts 30 beträgt beispielsweise 8 mm, wobei die Erfindung nicht darauf beschränkt ist. Die Breite 32 des Spalts 30 hängt beispielsweise von den Toleranzen und den jeweiligen Türkonzepten ab. Ein Wandabstand 42 kann dann beispielhaft 12 mm betragen, wobei die Erfindung ebenfalls nicht darauf beschränkt ist. Der Wandabstand 42 ist hierbei bezogen auf den ersten Türrahmenbereich 22-1 des Türrahmens 22. In anderen Ausführungen, in denen kein Sprung vorliegt, kann dieser Wandabstand 42 entlang des gesamten Strömungskanals 54 konstant sein.

Des Weiteren weist die aerodynamische Türblende 40 einen Türabstand 49 zu der Schiebetür 20 im geschlossenen Zustand auf. Dieser Türabstand 49 kann ebenfalls in Abhängigkeit von der Breite 32 des Spalts 30 ausgebildet sein. Insbesondere kann der Türabstand 49 vergleichbar groß sein wie die Breite 32 des Spalts 30. Demnach kann also beispielsweise bei einer Breite 32 des Spalts 30 von 8 mm der Türabstand 49 ebenfalls im Bereich von 8 mm liegen.

Ein Ende 44 der aerodynamischen Türblende 40 kann dabei bevorzugt eine abgerundete Kante 46 aufweisen. Grundsätzlich können solche abgerundeten Kanten zur Verringerungen von Druckabfällen verwendet werden. In bestimmten Ausführungsformen hat die aerodynamische Türblende 40 mehrere abgerundete Kanten oder nur abgerundete Kanten.

Die abgerundete Kante 46 kann sich dabei jedoch insbesondere an dem zur Schiebetür 20 im geschlossenen Zustand abgewandten Ende 44 der aerodynamischen Türblende 40 befinden. Durch die abgerundete Kante 46 kann beispielsweise die Abrisskante 56 bzw. der Ablösepunkt der Strömung, d.h. der Ort des Strömungsabrisses verschoben werden.

Insbesondere kann sich die abgerundete Kante 46 auf einer zum Türrahmen 22 abgewandten Seite 48 befinden. Dadurch wird die Abrisskante 56 in Richtung des oberen Bereichs zwischen aerodynamischer Türblende 40 und Türrahmen 22, also hin zum Strömungskanal 54, verschoben, sodass der Bereich des Unterdrucks optimaler lokalisiert ist, um eine möglichst effiziente Saugwirkung zu erzielen. Bei einem eckigen Ende würde die Abrisskante 56 entsprechend nach vorne, also weg vom Strömungskanal 54, verschoben werden, sodass ein Saugeffekt entsprechend geschwächt wäre. Die Saugwirkung hängt dabei auch von der Geschwindigkeit der Strömung und der Krümmung der Strömung ab. In alternativen Ausführungsformen kann die aerodynamische Türblende 40 statt der abgerundeten Kante 46 eine oder mehrere abgeschrägte Kanten bzw. eckig abgeschrägte Kanten oder eine oder mehrere facettierte Kanten aufweisen. Eine solche Kante kann bevorzugt an der gleichen Stelle wie die abgerundete Kante 46 positioniert sein. Auch dadurch kann eine Saugwirkung verbessert werden.

Die abgerundete Kante 46 kann auch einen Anstellwinkel größer 0° bezüglich der x-Achse am Ende der Rundung aufweisen, durch welchen die anliegende Strömung von der aerodynamischen Türblende 40 abgeworfen wird.

In der Figur 3 ist im Vergleich zur Figur 2 das in Figur 1 beschriebene Schienenfahrzeug 1 des Standes der Technik ohne erfindungsgemäße aerodynamische Türblende 40 gezeigt. Im Vergleich wird deutlich, dass der Fehllufteintrag in den Innenbereich 7 durch den mit einem Dichtelement 38 abgedichteten Spalt 30 deutlich größer ist als das bei dem erfindungsgemäßen Schienenfahrzeug 1 der Fall ist, siehe dazu im Vergleich Figur 2.

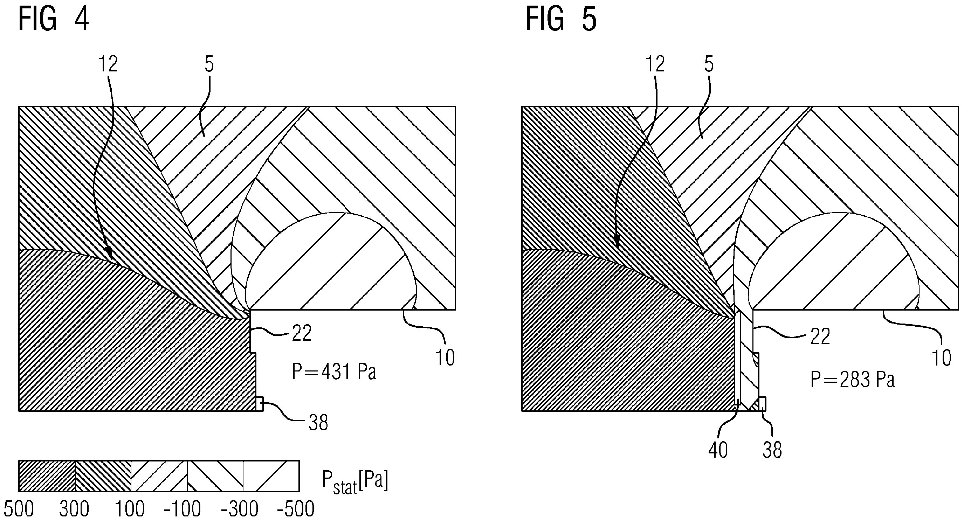

In der Figur 4 und 5 ist im jeweiligen Vergleich die im Au-βenbereich 5 des Schienenfahrzeugs 1 befindliche Verteilung des statischen Drucks gezeigt bei einer beispielhaft gewählten Geschwindigkeit des Schienenfahrzeugs 1 von 160 km/h. Dabei ist insbesondere deutlich erkennbar, dass der Druck im Bereich des Spalts 30 in der erfindungsmäßen Ausführung, Figur 5, deutlich geringer ist als der Druck im Bereich des Spalts 30 bei dem Schienenfahrzeug des Standes der Technik, Figur 4. Im Vergleich beträgt der Druck am Dichtelement 38 beispielhaft lediglich 283 Pa in der erfindungsgemäßen Ausführung, siehe Figur 5, während in der Ausführung des Standes der Technik ein vergleichsweiser hoher Druck von geringe 431 Pa auf das Dichtelement wirkt, siehe dazu Figur 4. Dies dokumentiert die Vorzüge des erfindungsgemäßen Schienenfahrzeugs 1 gegenüber dem Stand der Technik.

In der Figur 6 ist weiterhin eine Frontansicht eines erfindungsgemäßen Schienenfahrzeugs 1 mit aerodynamischer Türblende 40 in Frontansicht gezeigt. Die aerodynamische Türblende 40 ist dabei von der Schienenfahrzeugaußenwand 10 entsprechend beabstandet. In dem vorliegenden Fall beträgt der Wandabstand 42 rein beispielhaft 12 mm, wobei die Erfindung nicht darauf beschränkt ist. Beispielsweise kann der Wandabstand 42 von der Breite 32 des Spalts 30 abhängig sein, siehe dazu die Beschreibung zu Figur 2. Ferner ist hierbei ersichtlich, dass sich die aerodynamische Türblende 40 in vertikaler Richtung zur Schiebetür 20 erstreckt. Beispielsweise kann sich die aerodynamische Türblende 40 parallel zur z-Achse orientiert erstrecken. Die aerodynamische Türblende 40 kann bevorzugt eine wie in Figur 3 näher beschriebene abgerundete Kante oder alternativ eine facettierte oder eckig abgeschrägte Kante aufweisen.

Ein Vorteil der Erfindung ist ferner, dass die aerodynamische Türblende 40 auch im Nachhinein in ein bereits bestehendes Schienenfahrzeug 1 mit entsprechender Schiebetür 20 integriert werden kann.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Schienenfahrzeug
- 7: Innenbereich
- 10: Schienenfahrzeugaußenwand
- 12: Türöffnung
- 14: Randbereich
- 20: Schiebetür
- 22: Türrahmen
- 30: Spalt
- 32: Breite
- 38: Dichtelement
- 40: Türblende
- 42: Wandabstand
- 44: Ende
- 48: Seite
- 49: Türabstand

## Patentansprüche

1. Schienenfahrzeug (1), umfassend:
- eine Schienenfahrzeugaußenwand (10) mit einer Türöffnung (12) ;
- eine bezüglich der Schienenfahrzeugaußenwand (10) zu einem Innenbereich (7) des Schienenfahrzeugs (1) eingerückte Schiebetür (20), welche im geschlossenen Zustand die Türöffnung (12) abdeckt;
- einen Türrahmen (22) an einem Randbereich (14) der Türöffnung (12);
- und wobei zwischen der Schiebetür (20) im geschlossenen Zustand und dem Türrahmen (22) ein mit einem Dichtelement (38) abgedichteter Spalt (30) ausgebildet ist;
g e k e n n z e ichn e t durch
- eine am Türrahmen (22) befestigte, räumlich vom Türrahmen (22) und der Schiebetür (20) beabstandete, sich in vertikaler Ausdehnung der Schiebetür (20) erstreckende, dem Spalt (30) vorgelagerte aerodynamische Türblende (40), welche entlang des Türrahmens (22) ausgerichtet ist.

2. Schienenfahrzeug (1) nach Anspruch 1,
wobei die Schiebetür (20) als eine Taschenschiebetür ausgebildet ist.

3. Schienenfahrzeug (1) nach einem der vorherigen Ansprüche,
wobei die aerodynamische Türblende (40) parallel zum Türrahmen (22) ausgerichtet ist.

4. Schienenfahrzeug (1) nach einem der vorherigen Ansprüche,
wobei die aerodynamische Türblende (40) senkrecht zur Schienenfahrzeugaußenwand (10) ausgerichtet ist.

5. Schienenfahrzeug (1) nach einem der vorherigen Ansprüche,
wobei sich die aerodynamische Türblende (40) entlang des Türrahmens (22) bis zur Schienenfahrzeugaußenwand (10) erstreckt.

6. Schienenfahrzeug (1) nach einem der vorherigen Ansprüche,
wobei ein Wandabstand (42) der aerodynamischen Türblende (40) von dem Türrahmen (22) in Abhängigkeit von einer Breite (32) des Spalts (30) ausgebildet ist.

7. Schienenfahrzeug (1) nach Anspruch 6,
wobei der Wandabstand (42) größer als die Breite (32) des Spalts (30) ist.

8. Schienenfahrzeug (1) nach einem der vorherigen Ansprüche,
wobei sich eine abgerundete Kante (46) an einem von der Schiebetür (20) im geschlossenen Zustand abgewandten Ende (44) der aerodynamischen Türblende (40) befindet.

9. Schienenfahrzeug (1) nach Anspruch 8,
wobei die abgerundete Kante (46) sich auf einer zum Türrahmen (22) abgewandten Seite (48) befindet.

10. Schienenfahrzeug (1) nach einem der Ansprüche 1 bis 7,
wobei sich eine abgeschrägte Kante an dem von der Schiebetür (20) im geschlossenen Zustand abgewandten Ende (44) der aerodynamischen Türblende (40) und auf einer zum Türrahmen (22) abgewandten Seite (48) befindet.

11. Schienenfahrzeug (1) nach einem der vorherigen Ansprüche,
wobei ein Türabstand (49) der aerodynamischen Türblende (40) von der Schiebetür (20) in Abhängigkeit von einer Breite (32) des Spalts (30) ausgebildet ist.

## Claims

1. Rail vehicle (1), comprising:
- a rail vehicle outer wall (10) having a door opening (12) ;
- a sliding door (20), which is set back relative to the rail vehicle outer wall (10) towards an inner region (7) of the rail vehicle (1) and which, in the closed state, covers the door opening (12);
- a door frame (22) on an edge region (14) of the door opening (12);
- and wherein a gap (30) sealed with a sealing element (38) is formed between the sliding door (20), in the closed state, and the door frame (22);
**characterized by**
- an aerodynamic door panel (40), which is oriented along the door frame (22), is fastened to the door frame (22), spatially distanced from the door frame (22) and the sliding door (20), extends in the vertical extent of the sliding door (20) and is arranged in front of the gap (30).

2. Rail vehicle (1) according to Claim 1,
wherein the sliding door (20) takes the form of a sliding pocket door.

3. Rail vehicle (1) according to either of the preceding claims,
wherein the aerodynamic door panel (40) is oriented parallel to the door frame (22).

4. Rail vehicle (1) according to one of the preceding claims,
wherein the aerodynamic door panel (40) is oriented perpendicular to the rail vehicle outer wall (10).

5. Rail vehicle (1) according to one of the preceding claims,
wherein the aerodynamic door panel (40) extends along the door frame (22) up to the rail vehicle outer wall (10).

6. Rail vehicle (1) according to one of the preceding claims,
wherein a wall spacing (42) of the aerodynamic door panel (40) from the door frame (22) is formed in dependence on a width (32) of the gap (30).

7. Rail vehicle (1) according to Claim 6,
wherein the wall spacing (42) is larger than the width (32) of the gap (30).

8. Rail vehicle (1) according to one of the preceding claims,
wherein a rounded edge (46) is situated at an end (44) of the aerodynamic door panel (40) that faces away from the sliding door (20) in the closed state.

9. Rail vehicle (1) according to Claim 8,
wherein the rounded edge (46) is situated on a side (48) facing away from the door frame (22).

10. Rail vehicle (1) according to one of Claims 1 to 7,
wherein a bevelled edge is situated on that end (44) of the aerodynamic door panel (40) that faces away from the sliding door (20) in the closed state and on a side (48) facing away from the door frame (22).

11. Rail vehicle (1) according to one of the preceding claims,
wherein a door spacing (49) of the aerodynamic door panel (40) from the sliding door (20) is formed in dependence on a width (32) of the gap (30).

## Revendications

1. Véhicule (1) ferroviaire comprenant :
- une paroi (10) extérieure de véhicule ferroviaire ayant une baie (12) de porte ;
- une porte (20) coulissante rentrée par rapport à la paroi (10) extérieure du véhicule ferroviaire dans une partie (7) intérieure du véhicule (1) ferroviaire et recouvrant à l'état fermé la baie (12) de porte ;
- un cadre (20) de porte sur une partie (14) de bord de la baie (12) de porte ;
- et dans lequel entre la porte (20) coulissante à l'état fermé et le cadre (22) de porte est constitué un intervalle (30) rendu étanche par un élément (38) d'étanchéité; **caractérisé par**
- un écran (40) de porte aérodynamique, fixé au cadre (22) de la porte, à distance dans l'espace du cadre (22) de la porte et de la porte (20) coulissante, s'étendant dans une étendue verticale de la porte (20) coulissante, monté avant l'intervalle (30) et dirigé le long du cadre (22) de la porte.

2. Véhicule (1) ferroviaire suivant la revendication 1,
dans lequel la porte (20) coulissante est constituée sous la forme d'une porte coulissante à poche.

3. Véhicule (1) ferroviaire suivant l'une des revendications précédentes,
dans lequel l'écran (40) de porte aérodynamique est orienté parallèlement au cadre (22) de la porte.

4. Véhicule (1) ferroviaire suivant l'une des revendications précédentes,
dans lequel l'écran (40) de porte aérodynamique est orienté perpendiculairement à la paroi (40) extérieure du véhicule ferroviaire.

5. Véhicule (1) ferroviaire suivant l'une des revendications précédentes,
dans lequel l'écran (40) de porte aérodynamique s'étend le long du cadre (22) de la porte jusqu'à la paroi (10) extérieure du véhicule ferroviaire.

6. Véhicule (1) ferroviaire suivant l'une des revendications précédentes,
dans lequel une distance (40) entre parois de l'écran (40) de porte aérodynamique au cadre (22) de la porte est constituée en fonction d'une largeur (32) de l'intervalle (30).

7. Véhicule (1) ferroviaire suivant la revendication 6,
dans lequel la distance (42) entre parois est plus grande que la largeur (32) de l'intervalle (30).

8. Véhicule (1) ferroviaire suivant l'une des revendications précédentes,
dans lequel une arête (46) arrondie se trouve à une extrémité (44) loin à l'état fermé de la porte (20) coulissante, de l'écran (40) de porte aérodynamique.

9. Véhicule (1) ferroviaire suivant la revendication 8,
dans lequel l'arête (46) arrondie se trouve d'un côté (48) loin du cadre (22) de la porte.

10. Véhicule (1) ferroviaire suivant l'une des revendications 1 à 7,
dans lequel une arête biseautée se trouve du côté (44) loin, à l'état fermé de la porte (20) coulissante, de l'écran (40) de porte aérodynamique et d'un côté (48) loin du cadre (22) de la porte.

11. Véhicule (1) ferroviaire suivant l'une des revendications précédentes,
dans lequel une distance (49) de l'écran (40) de porte aérodynamique à la porte (20) coulissante est constituée en fonction d'une largeur (32) de l'intervalle (30).
